# EUROPEAN PATENT APPLICATION

(11) **EP 2 924 913 A1**
(43) Date of publication of application: **30.09.2015**
(21) Application number: 12890807.6
(22) Date of filing: 28.12.2012
(51) Int. Cl.: H04L 9/08

(54) **AUTHENTICATION METHOD, DEVICE AND SYSTEM**

(71) Applicant: Huawei Technologies Co., Ltd., Longgang District Shenzhen, Guangdong 518129 (CN)
(72) Inventor: CHENG, Biao, Shenzhen Guangdong 518129 (CN)
(74) Representative: Goddar, Heinz J.
(86) International application number: PCT/CN2012/087794
(87) International publication number: WO 2014/101084

(57) **Abstract**

Embodiments of the present invention, relating to the field of communications, provide a method, a device, and a system for authentication, which can avoid the problem of password disclosure caused by that authentication password information is manually input or authentication password information is not changed within a long time period and improve authentication password information security. The method includes: generating, by a network information management system, first password information and delivering a first notification message carrying the first password information to an optical line terminal, so that the first notification message delivered by the network information management system is transparently sent to an optical network unit through the optical line terminal; and implementing, by the optical network unit, authentication with the optical line terminal according to the first password information in the first notification message. The network information management system periodically updates the first password information. The embodiments of the present invention are used for update of authentication information.

## Description

### TECHNICAL FIELD

The present invention relates to the field of communications, and in particular, to a method, a device, and a system for authentication.

### BACKGROUND

A PON (Passive Optical Network, passive optical network) technology can save optical resources to a great extent and currently, has been widely applied to the access field. A PON network comprises an OLT (Optical Line Terminal optical line terminal), POS (Passive Optical Splitter, passive optical splitter), and ONU (Optical Network Unit, optical network unit).

Generally, a single PON interface of an OLT is mounted with a plurality of ONUs. To control the access of each ONU, an authentication mechanism is adopted between the OLT and ONUs. This authentication mechanism compares authentication information provided by the OLT and an ONU to determine whether the access of the ONU is valid. During OLT and ONU device deployment, required authentication information must be manually input for the OLT and ONUs on site. The deployment process is rather complicated. Besides, during the ONU device deployment, installation personnel or a user needs to manually input authentication password information on site. As a result, on-site soft-commissioning can be avoided. Manual inputting of the authentication password information easily leads to password disclosure. In addition, the authentication password information stored in ONU devices may not be periodically refreshed. If a password is not changed within a long time period, the password disclosure may occur.

### SUMMARY

Embodiments of the present invention provide a method, a device, and a system for authentication, which can avoid the problem of password disclosure caused by that authentication password information is manually input or authentication password information is not changed within a long time period and improve the security of the authentication password information

In order to achieve the foregoing objectives, the embodiments of the present invention adopt the following technical solutions:

In a first aspect, an authentication method is provided, which is applied to a passive optical network system, and includes:
receiving, by an optical network unit, a first notification message transparently sent from an optical line termination, where the first notification message includes at least first password information required for authentication of the optical network unit, and the first notification message is a first notification message delivered by a network information management system; and
implementing, by the optical network unit, authentication with the optical line termination according to the first password information in the first notification message.

With reference to the first aspect, in a first possible implementation manner, the first password information is password information encrypted through a first key, where the first key is a key mutually agreed by the optical network unit and the network information management system.

With reference to the first aspect or the first possible implementation manner of the first aspect, in a second possible implementation manner, the implementing, by the optical network unit, authentication with the optical line termination according to the first password information in the first notification message specifically includes:
parsing, by the optical network unit, according to the first password information in the first notification message, the first password information by using the mutually agreed first key to obtain decrypted first password information; and
implementing, by the optical network unit, authentication with the optical line termination according to the decrypted first password information.

With reference to the first aspect, in a third possible implementation manner, the method further includes:
receiving, by the optical network unit, a second notification message transparently sent from the optical line termination, where the second notification message includes at least second password information required for authentication of the optical network unit, and the second notification message is a second notification message delivered by the network information management system;
decrypting, by the optical network unit, the received second password information by using the first password information as a second key to obtain decrypted second password information; and
implementing, by the optical network unit, authentication with the optical line terminal again according to the decrypted second password information.

In a second aspect, an authentication method is provided, which is applied to a passive optical network system, and includes:
generating, by a network information management system, first password information, where the first password information is password information required for authentication of an optical network unit; and
delivering, by the network information management system, a first notification message carrying the first password information to an optical line terminal, so that the first notification message delivered by the network information management system is transparently sent to the optical network unit through the optical line terminal.

With reference to the second aspect, in a first possible implementation manner, the generating, by the network information management system, first password information specifically includes:
encrypting, by the network information management system, the first password information by using a first key, where the first key is a key mutually agreed by the network information management system and the optical network unit; and the delivering, by the network information management system, a first notification message carrying the first password information to an optical line terminal specifically includes:
   delivering, by the network information management system, the first notification message carrying the encrypted first password information to the optical line terminal.

With reference to the second aspect, in a second possible implementation manner, the method further includes:
periodically updating, by the network information management system, the first password information.

With reference to the second aspect or the second possible implementation manner of the second aspect, in a third possible implementation manner, the method further includes:
generating, by the network information management system, second password information by using the first password information as a second key; and
delivering, by the network information management system, a second notification message carrying the second password information to the optical line terminal, so that the second notification message delivered by the network information management system is transparently sent to the optical network unit through the optical line terminal.

In a third aspect, an optical network unit is provided, and the optical network unit includes:
a receiving unit, configured to receive a first notification message transparently sent from an optical line terminal, where the first notification message includes at least first password information required for authentication of the optical network unit, and the first notification message is a first notification message delivered by a network information management system; and
an authenticating unit, configured to implement authentication with the optical line terminal according to the first password information in the first notification message.

With reference to the third aspect, in a first possible implementation manner, the first password information is password information encrypted through a first key, where the first key is a key mutually agreed by the optical network unit and the network information management system.

With reference to the third aspect or the first possible implementation manner of the third aspect, in a second possible implementation manner, the authenticating unit is specifically configured to parse, according to the first password information, the first password information by using the mutually agreed first key in the first notification message to obtain decrypted first password information; and implement authentication with the optical line terminal according to the decrypted first password information.

With reference to the third aspect, in a third possible implementation manner, the receiving unit is further configured to receive a second notification message transparently sent from the optical line terminal, where the second notification message includes at least second password information required for authentication of the optical network unit and the second notification message is a second notification message delivered by the network information management system; and
the authenticating unit is further configured to decrypt the received second password information by using the first password information as a second key to obtain decrypted second password information; and implement next authentication with the optical line terminal according to the decrypted second password information.

In a fourth aspect, a network information management system is provided, and the network information management system includes:
a generating unit, configured to generate first password information, where the first password information is password information required for authentication of an optical network unit; and
a sending unit, configured to deliver a first notification message carrying the first password information to an optical line terminal, so that the delivered first notification message is transparently sent to the optical network unit through the optical line terminal.

With reference to the fourth aspect, in a first possible implementation manner, the generating unit is specifically configured to encrypt the first password information by using a first key, where the first key is a key mutually agreed by the network information management system and the optical network unit; and
the sending unit is specifically configured to deliver the first notification message carrying the encrypted first password information to the optical line terminal.

With reference to the fourth aspect, in a second possible implementation manner, the network information management system further includes:
an updating unit, configured to periodically update the first password information; where
the generating unit is further configured to generate second password information by using the first password information as a second key; and
the sending unit is further configured to deliver a second notification message carrying the second password information to the optical line terminal, so that the second notification message delivered by the network information management system is transparently sent to the optical network unit through the optical line terminal.

In a fifth aspect, an authentication system is provided, and the authentication system includes the optical network unit in the third aspect and the network management system in the fourth aspect.

The embodiments of the present invention provide a method, a device, and a system for authentication. A network information management system generates first password information and delivers a first notification message carrying the first password information to an optical line terminal, so that the first notification message delivered by the network information management system is transparently sent to an optical network unit through the optical line terminal; and the optical network unit implements authentication with the optical line terminal according to the first password information in the first notification message. The network information management system periodically updates the first password information, which can avoid the problem of password disclosure caused by that authentication password information is manually input or authentication password information is not changed within a long time period and improve authentication password information security.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following descriptions show merely some embodiments of the present invention, and persons of ordinary skill in the art may still derive other drawings from the accompanying drawings without creative efforts.
FIG. 1 is a schematic flowchart of an authentication method according to an embodiment of the present invention;
FIG. 2 is a schematic flowchart of an authentication method according to another embodiment of the present invention;
FIG. 3 is a schematic flowchart of an authentication method according to another embodiment of the present invention;
FIG. 4 is a schematic structural diagram of an optical network unit according to another embodiment of the present invention;
FIG. 5 is a schematic structural diagram of a network information management system according to another embodiment of the present invention;
FIG. 6 is a schematic structural diagram of an optical network unit according to another embodiment of the present invention;
FIG 7 is a schematic structural diagram of a network information management system according to another embodiment of the present invention; and
FIG. 8 is a schematic structural diagram of an authentication system according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

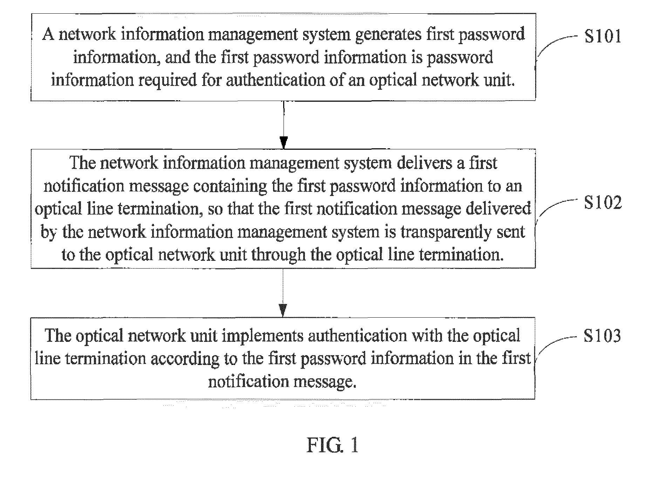

An embodiment of the present invention provides an authentication method, which is applied to a passive optical network system, and as shown in FIG. 1, includes:

S101. A network information management system generates first password information, where the first password information is password information required for authentication of an optical network unit.

The network information management system may be an NMS (Network Management System, network management system) or authentication server.

S102. The network information management system delivers a first notification message carrying the first password information to an optical line terminal, so that the first notification message delivered by the network information management system is transparently sent to the optical network unit through the optical line terminal.

Exemplarily, the first password information may be password information encrypted through a first key, where the first key is a key mutually agreed by the ONU (Optical Network Unit, optical network unit) and the network information management system, and the network information management system may deliver the password information encrypted through the first key, so that network information management system may deliver the password information encrypted through the first key, and transparently send the password information to the optical network unit ONU through the optical line termination OLT (Optical Line Terminal, optical line terminal); or the first password information may be password information that is not encrypted through a key, so that the network information management system may deliver the password information that is not encrypted through a key, so that the password information is transparently sent to the optical network unit ONU through the optical line terminal OLT.

S103. The optical network unit implements authentication with the optical line terminal according to the first password information in the first notification message.

In addition, the authentication method may further include an update policy of the network information management system, and the first password information is periodically updated by using the update policy. When an update time specified by the periodic update policy is reached, the network information management system sends updated password information to the optical network unit.

The embodiment of the present invention provides an authentication method. A network information management system generates first password information and delivers a first notification message carrying the first password information to an optical line terminal, so that the first notification message delivered by the network information management system is transparently sent to an optical network unit through the optical line terminal; and the optical network unit implements authentication with the optical line terminal according to the first password information in the first notification message. The network information management system periodically updates the first password information, which can avoid the problem of password disclosure caused by that authentication password information is manually input or authentication password information is not changed within a long time period and improve authentication password information security.

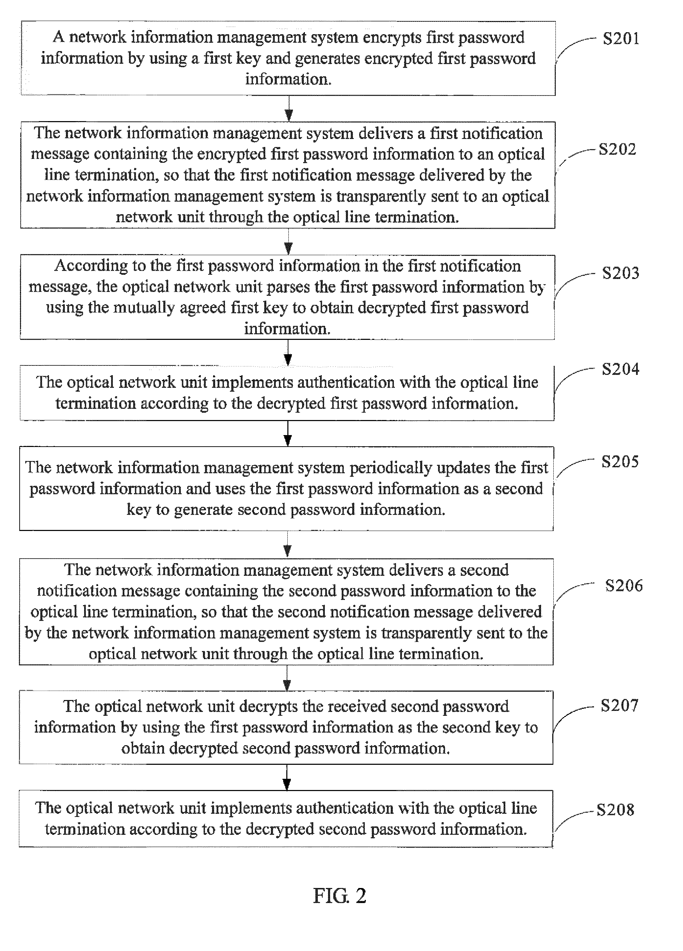

Another embodiment of the present invention provides an authentication method, which is applied to a PON (Passive Optical Network, passive optical network) system, and as shown in FIG. 2, includes:
S201. A network information management system encrypts first password information by using a first key and generates encrypted first password information.

The first password information is password information required for authentication of an optical network unit, and the first key is a key mutually agreed by the network information management system and the optical network unit.

Exemplarily, the network information management system may be an NMS or authentication server. Specifically, authentication password information about a pre-deployed optical network unit ONU may be pre-deployed in the network management system NMS. When the ONU sends a registration request message to an optical line terminal OLT, the OLT sends the registration request message to the NMS, and the NMS generates, according to the registration request message, first password information corresponding to the ONU and encrypts the first password information according to a key mutually agreed with the ONU.

Alternatively, authentication password information about a pre-deployed optical network unit ONU may be pre-deployed on the authentication server. When the ONU sends a registration request message to an optical line terminal OLT, the OLT sends the registration request message to the network management system NMS. After receiving the registration request message from the NMS, the authentication server generates first password information corresponding to the ONU according to the registration request message and encrypts the first password information according to a key mutually agreed with the ONU.

In this way, the authentication password information may be managed in a centralized manner in the network information management system to avoid password disclosure among intermediate nodes. At the same time, during optical network unit ONU deployment, soft-commissioning may be avoided on site to avoid the problem of password disclosure easily caused by inputting of an authentication password on site and reduce the complexity of onsite hardware deployment, ensuring password information security by using a mechanism.

Generally, a PON network consists of an OLT, POSs (Passive Optical Splitter, passive optical splitter), ONUs, and ONTs (Optical Network Terminal, optical network terminal). A single PON interface of the OLT may be mounted with a plurality of ONUs. The OLT is a primary device and may send data to a secondary device ONU in broadcast manner. The OLT connects to a front end (convergence layer) switch by using a network cable, converts electrical signals sent from the switch into optical signals, and interconnects to a user-end POS by using a single optical fiber to implement functions such as control, management, and ranging on a user-end device ONU.

S202. The network information management system delivers a first notification message carrying the encrypted first password information to an optical line terminal, so that the first notification message delivered by the network information management system is transparently sent to an optical network unit through the optical line terminal.

Exemplarily, if the network information management system is a network management system NMS, the NMS delivers the first notification message carrying the encrypted first password information to the optical line terminal OLT, and then, the optical line terminal OLT transparently sends the first notification message carrying the encrypted first password information to the optical network unit ONU.

If the network information management system is an authentication server, the authentication server delivers the first notification message carrying the encrypted first password information to a network management system NMS, the network management system NMS sends the first notification message to the optical line terminal OLT, and the optical line terminal OLT transparently sends the first notification message to the optical network unit ONU.

S203. The optical network unit parses, according to the first password information in the first notification message, the first password information by using the mutually agreed first key to obtain decrypted first password information.

Exemplarily, if the first password information transparently sent from the optical line terminal OLT and received by the optical network unit ONU is delivered by the network management system NMS, the optical network unit ONU may parse the first password information by using the first key mutually agreed with the network management system NMS, so that the optical network unit ONU may obtain the decrypted first password information.

If the first password information transparently sent from the optical line terminal OLT and received by the optical network unit ONU is delivered by the authentication server, the optical network unit ONU may parse the first password information by using the first key mutually agreed with the authentication server, so that the optical network unit ONU may obtain the decrypted first password information.

S204. The optical network unit implements authentication with the optical line terminal according to the decrypted first password information.

Exemplarily, when the optical network unit ONU receives the first password information transparently sent from the optical line terminal OLT and decrypts the first password information, the password information may be stored locally on the optical line terminal OLT at the same time, so that the optical network unit ONU may start authentication with the optical line terminal OLT.

The authentication process may be as follows: When the OLT automatically detects that a window is opened, an online ONU stops sending upstream data, an ONU that needs to be brought online after authentication sends a registration request message to the OLT. After receiving the registration request message, the OLT allocates an ONUID to the ONU according to an identification code (SN or MAC) in the registration request message and sends the ONUID to the ONU. Then, the OLT ranges the ONU, records ranging information, and sends a ranging message to the ONU for the ONU to acknowledge the distance between the ONU and the OLT. At this time, the ONU may be considered to be online temporarily. Then, the OLT proactively delivers an authentication request message to the ONU. After receiving the authentication request message, the ONU sends locally stored first password information and a locally stored identification code to the OLT, where the first password information may be Password (password), LOID plus CHECKCODE (logical identifier plus check code), and so on. After receiving the first password information and identification code, the OLT compares the first password information and identification code with authentication password information and an identification code that are locally stored by the OLT. If the first password information and identification code that are sent from the ONU are consistent with the authentication password information and identification code that are locally stored by the OLT, the ONU is a valid device, authentication of the ONU is successful, and the OLT delivers specific service configuration to the ONU. If the first password information and identification code that are sent from the ONU are inconsistent with the authentication password information and identification code that are locally stored by the OLT, the ONU is an invalid device, authentication of the ONU fails, and the OLT sends a deactivation message to the ONU for the ONU to enter an initialization state.

S205. The network information management system periodically updates the first password information and generates second password information by using the first password information as a second key.

The first password information needs to be periodically updated. Optionally, when the network information management system is a network management system NMS, a password update policy may be deployed in the NMS, and the password update policy may enable the network management system NMS to periodically trigger update of the first password when a periodic time of the policy is reached. The network management system NMS may generate the second password information by using the first password information as the second key to obtain encrypted second password information.

Optionally, when the network information management system is an authentication server, a password update policy may be deployed on the authentication server, enabling the authentication server to periodically trigger update of the first password when a periodic time of the policy is reached. The authentication server may use the first password information as the second key and generate the second password information to obtain encrypted second password information. In this way, password information may be periodically updated according to the update policy, which can improve security of the password information.

It should be noted that an update period in the password update policy may be periodic or non-periodic.

S206. The network information management system delivers a second notification message carrying the second password information to the optical line terminal, so that the second notification message delivered by the network information management system is transparently sent to the optical network unit through the optical line terminal.

Specifically, when the network information management system periodically triggers update of the password information, the network management system NMS or the authentication server may deliver the second notification message carrying second password information generated by using the first password information as a key to the optical line terminal OLT, and the optical line terminal OLT transparently sends the second notification message to the optical network unit. At the same time, the optical line terminal OLT locally stores the second password information in the second notification message, so that the optical network unit ONU may implement next authentication with the optical line terminal OLT. When delivering the encrypted second password information, the authentication server may send the second password information to the network management system NMS, then, the network management system NMS sends the second notification message carrying the encrypted second password information to the optical line terminal OLT, and the optical line terminal OLT transparently sends the second notification message to the optical network unit.

S207. The optical network unit decrypts the received second password information by using the first password information as the second key to obtain decrypted second password information.

Specifically, when the first password needs to be updated, the optical network unit ONU may periodically receive the second notification message carrying the encrypted second password information from the optical line terminal OLT. The optical network unit ONU may parse the second password information by using the locally stored first password information as a key to obtain the decrypted second password information.

S208. The optical network unit implements next authentication with the optical line terminal according to the decrypted second password information.

Specifically, after obtaining the decrypted second password information, the optical network unit ONU uses the decrypted second password information to replace the locally stored first password information to implement next authentication with the optical line terminal. In this way, when the optical network unit ONU goes offline, the updated second password information may be used for next authentication to improve authentication password information security.

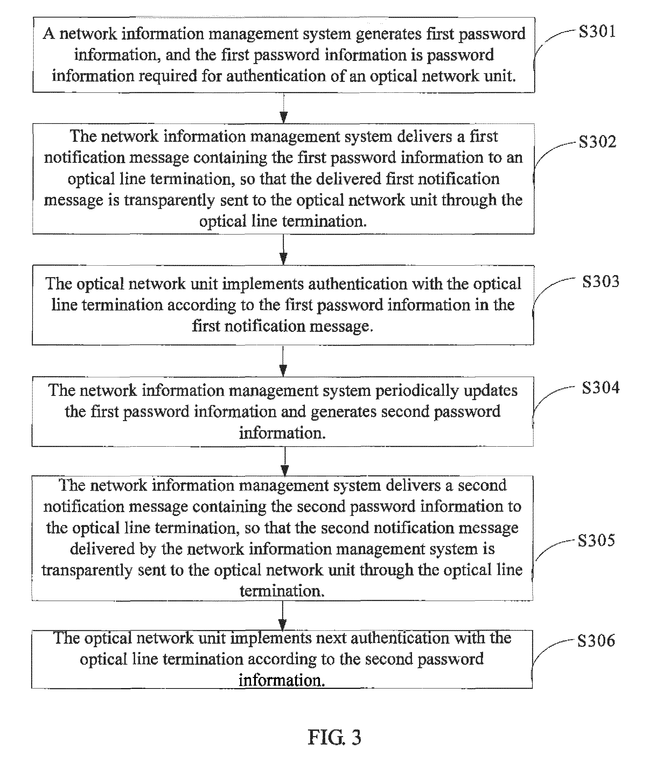

Another embodiment of the present invention further provides an authentication method, which, as shown in FIG. 3, includes:

S301. A network information management system generates first password information, where the first password information is password information required for authentication of an optical network unit.

Exemplarily, the network information management system may be a network management system NMS or an authentication server. When the optical network unit ONU requests to register and perform authentication, the network management system NMS or the authentication server may generate the first password information, where the first password information is password information that is not encrypted, namely, the first password information may be sent in plain text by the network management system NMS or the authentication server.

S302. The network information management system delivers a first notification message carrying the first password information to an optical line terminal, so that the first notification message delivered by the network information management system is transparently sent to the optical network unit through the optical line terminal

Exemplarily, if the network information management system is a network management system NMS, the NMS delivers a first notification message carrying unencrypted first password information to the optical line terminal OLT, and then, the optical line terminal OLT transparently sends the first notification message carrying the first password information to the optical network unit ONU.

If the network information management system is an authentication server, the authentication server delivers a first notification message carrying unencrypted first password information to a network management system NMS, the network management system NMS sends the first notification message to the optical line terminal OLT, and the optical line terminal OLT transparently sends the first notification message to the optical network unit ONU.

S303. The optical network unit implements authentication with the optical line terminal according to the first password information in the first notification message.

Exemplarily, after receiving the first notification message from the optical line terminal OLT, the optical network unit ONU implements authentication with the optical line terminal OLT according to unencrypted first password information in the first notification message. The authentication process is the same as the authentication process in S204 in the foregoing embodiment, which is not described again.

S304. The network information management system periodically updates the first password information and generates second password information.

Exemplarily, a password update policy may be deployed in the network information management system to periodically update the first password information. The network information management system may be a network management system NMS, and the network management system NMS generates the second password information when a password update period time of the policy is reached. The second password information may be password information that is not encrypted. Alternatively, the network information management system may be an authentication server, and the authentication server generates unencrypted second password information when a password update period time of the policy is reached.

S305. The network information management system delivers a second notification message carrying the second password information to the optical line terminal, so that the second notification message delivered by the network information management system is transparently sent to the optical network unit through the optical line terminal.

Specifically, when the network information management system periodically triggers update of the password information, the network management system NMS or the authentication server may deliver the second notification message carrying the unencrypted second password information to the optical line terminal OLT, and the optical line terminal OLT transparently sends the second notification message to the optical network unit. At the same time, the optical line terminal OLT locally stores the second password information in the second notification message, so that the optical network unit ONU may implement next authentication with the optical line terminal OLT.

S306. The optical network unit implements next authentication with the optical line terminal according to the second password information.

Specifically, after periodically receiving the unencrypted second password information from the optical line terminal OLT, the optical network unit ONU uses the second password information to replace locally stored first password information. When the optical network unit ONU performs authentication with the optical line terminal OLT again, updated second password information may be used for authentication to improve authentication password information security.

It should be noted that, the implementation method of the ONU in the preceding embodiment is also applicable to the ONT, and applicable devices include but are not limited to the ONU, ONT, and OLT.

In addition, the preceding embodiment may be applicable to a GPON network environment, an EPON network environment, or may also be applicable to an XG-PON network environment, a 10G-EPON network environment, and a WDM-PON network environment.

The embodiment of the present invention provides an authentication method. A network information management system generates first password information, where the first password information is password information encrypted through a first key or unencrypted password information, and then, delivers a first notification message carrying the first password information to an optical line terminal, so that the first notification message delivered by the network information management system is transparently sent to an optical network unit through the optical line terminal, so that the optical network unit implements authentication with the optical line terminal. When the network information management system periodically updates the first password information, second password information is generated by using the first password information as a second key, or unencrypted second password information is directly generated. Then, the network information management system delivers a second notification message carrying the second password information to the optical line terminal, and the second notification message delivered by the network information management system is transparently sent to the optical network unit through the optical line terminal, so that the optical network unit implement next authentication with the optical line terminal, which can avoid the problem of password disclosure caused by that authentication password information is manually input or authentication password information is not changed within a long time period and improve authentication password information security.

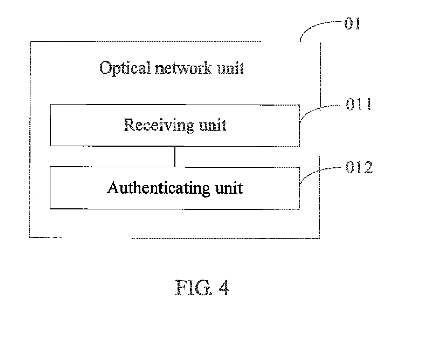

Another embodiment of the present invention provides an optical network unit 01, which, as shown in FIG. 4, includes:
a receiving unit 011, configured to receive a first notification message transparently sent from an optical line terminal, where the first notification message includes at least first password information required for authentication of the optical network unit, and the first notification message is a first notification message delivered by a network information management system; and
an authenticating unit 012, configured to implement authentication with the optical line terminal according to the first password information in the first notification message.

Further, the first password information is password information encrypted through a first key, where the first key is a key mutually agreed by the optical network unit and the network information management system.

Further, the authenticating unit 012 may be specifically configured to:
parse, according to the first password information in the first notification message, the first password information by using the mutually agreed first key to obtain decrypted first password information; and implement authentication with the optical line terminal according to the decrypted first password informationterminal.

Further, the receiving unit 011 may be further configured to:
receive a second notification message transparently sent from the optical line terminal, where the second notification message includes at least second password information required for authentication, and the second notification message is a second notification message delivered by the network information management system.

The authenticating unit 012 may be further configured to decrypt the received second password information by using the first password information as a second key to obtain decrypted second password information; and implement next authentication with the optical line terminal according to the decrypted second password information.

The embodiment of the present invention provides an optical network unit. A first notification message transparently sent from an optical line terminal is received, where the first notification message includes at least first password information required for authentication of the optical network unit, and the first notification message is a first notification message delivered by a network information management system. Further, the optical network unit implements authentication with the optical line terminal according to the first password information in the first notification message, which can avoid password disclosure caused by that password information is manually input and improve password information security.

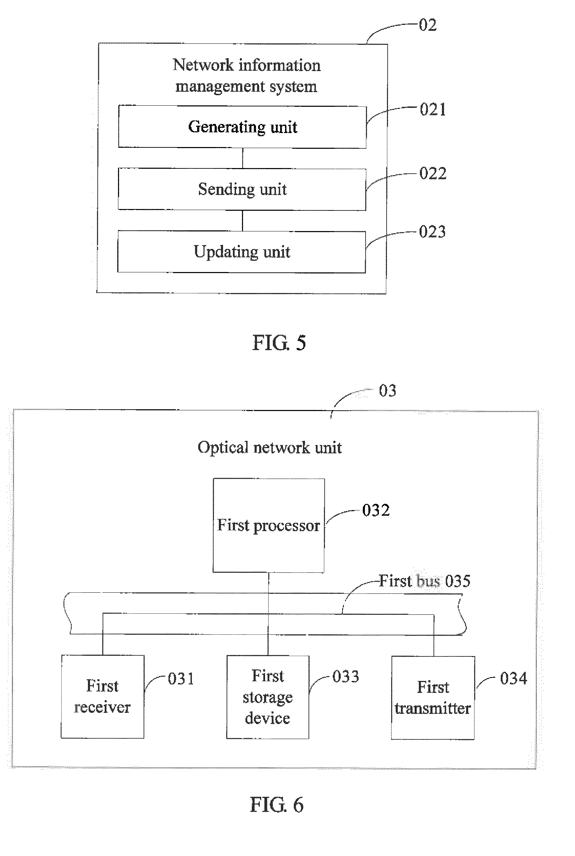

Another embodiment of the present invention provides a network information management system 02, which, as shown in FIG. 5, includes:
a generating unit 021, configured to generate first password information, where the first password information is password information required for authentication of an optical network unit; and
a sending unit 022, configured to deliver a first notification message carrying the first password information to an optical line terminal, so that the delivered first notification message is transparently sent to the optical network unit through the optical line terminal.

Further, the generating unit 021 may be specifically configured to:
encrypt the first password information by using a first key, where the first key is a key mutually agreed by the network information management system and the optical network unit.

The sending unit 022 may be specifically configured to:
deliver the first notification message carrying the encrypted first password information to the optical line terminal.

Further, the network information management system 02 may further include:
an updating unit 023, configured to periodically update the first password information; where
the generating unit 021 is further configured to generate second password information by using the first password information as a second key; and
the sending unit 022 is further configured to deliver a second notification message carrying the second password information to the optical line terminal, so that the second notification message delivered by the network information management system is transparently sent to the optical network unit through the optical line terminal.

The embodiment of the present invention provides a network information management system. First password information is generated, where the first password information is password information required for authentication of an optical network unit, and a first notification message carrying the first password information is delivered to an optical line terminal, so that the delivered first notification message is transparently sent to the optical network unit through the optical line terminal, and the first password information is periodically updated, which can avoid the problem of password disclosure caused by that password information is manually input or password information is not changed within a long time period and improve password information security.

Another embodiment of the present invention provides an optical network unit 03, which as shown in FIG. 6, includes a first bus 035, a first processor 032 connected to the first bus 035, a first receiver 031, a first transmitter 034, and a first storage device 033, where the first storage device 054 is configured to store a program and the first processor 032 is configured to execute the program to instruct each unit to implement the methods provided in the preceding embodiments, where:
the first receiver 031 is configured to receive a first notification message transparently sent from an optical line terminal, where the first notification message includes at least first password information required for authentication of the optical network unit, and the first notification message is a first notification message delivered by a network information management system; and
the first processor 032 is configured to implement authentication with the optical line terminal according to the first password information in the first notification message.

Further, the first password information is password information encrypted through a first key, where the first key is a key mutually agreed by the optical network unit and the network information management system.

Further, the first processor 032 may be specifically configured to, parse, according to the first password information in the first notification message, the first password information by using the mutually agreed first key to obtain decrypted first password information; and implement authentication with the optical line terminal according to the decrypted first password information terminal.

Further, the first receiver 031 may be further configured to receive a second notification message transparently sent from the optical line terminal, where the second notification message includes at least second password information required for authentication, and the second notification message is a second notification message delivered by the network information management system.

The first processor 032 may be further configured to decrypt the received second password information by using the first password information as a second key to obtain decrypted second password information; and implement next authentication with the optical line terminal according to the decrypted second password information.

The embodiment of the present invention provides an optical network unit. A first notification message transparently sent from an optical line terminal is received, where the first notification message includes at least first password information required for authentication of the optical network unit, and the first notification message is a first notification message delivered by a network information management system. Further, the optical network unit implements authentication with the optical line terminal according to the first password information in the first notification message, which can avoid password disclosure caused by that password information is manually input and improve password information security.

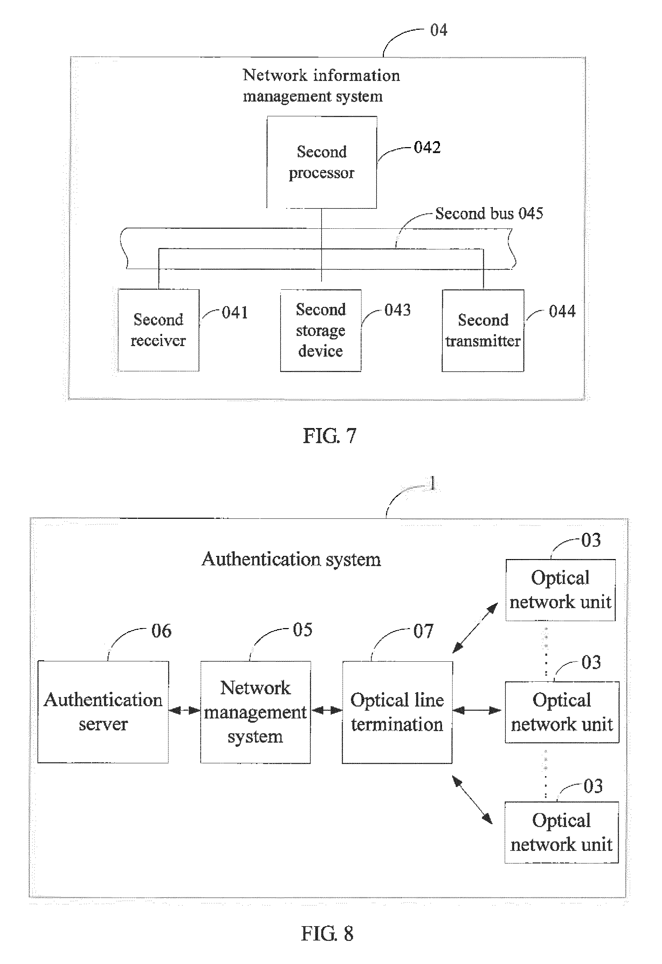

Another embodiment of the present invention provides a network information management system 04, where, as shown in FIG. 7, the network information management system may be a network management system 05 or an authentication server 06 and may include a second bus 045, a second processor 042 connected to the second bus 045, a second receiver 041, a second transmitter 044, and a second storage device 043, where the second storage device 044 is configured to store a program, and the second processor 042 is configured to execute the program to instruct each unit to implement the methods provided in the preceding embodiments, where:
the second processor 042 is configured to generate first password information, where the first password information is password information required for authentication of an optical network unit; and
the second transmitter 044 is configured to deliver a first notification message carrying the first password information to an optical line terminal, so that the delivered first notification message is transparently sent to the optical network unit through the optical line terminal.

Further, the second processor 042 may be specifically configured to encrypt the first password information by using a first key, where the first key is a key mutually agreed by the network information management system and the optical network unit.

The second transmitter 044 may be specifically configured to deliver the first notification message carrying the encrypted first password information to the optical line terminal.

Further, the second processor 042 may be configured to:
periodically update the first password information; and
generate second password information by using the first password information as a second key.

The second transmitter 044 may be further configured to deliver a second notification message carrying the second password information to the optical line terminal, so that the second notification message delivered by the network information management system is transparently sent to the optical network unit through the optical line terminal.

The embodiment of the present invention provides a network information management system. First password information is generated, where the first password information is password information required for authentication of an optical network unit, and a first notification message carrying the first password information is delivered to an optical line terminal, so that the delivered first notification message is transparently sent to the optical network unit through the optical line terminal, and the first password information is periodically updated, which can avoid the problem of password disclosure caused by that password information is manually input or password information is not changed within a long time period and improve password information security.

Another embodiment of the present invention provides an authentication system 1, which, as shown in FIG, 8, includes the optical network unit 03 and the network information management system 04 that are provided in the preceding embodiments.

If the network information management system 04 is a network management system 05, the network management system 05 may be configured to generate first password information and then, deliver a first notification message carrying the first password information to an optical line terminal 07, so that the delivered first notification message is transparently sent to the optical network unit 03 through the optical line terminal 07. The network management system 05 may periodically update the first password information.

If the network information management system 04 is an authentication server 06, the authentication server 06 may be configured to generate first password information and then, deliver a first notification message carrying the first password information to a network management system 05. The network management system 05 delivers the first notification message carrying the first password information to an optical line terminal 07, so that the delivered first notification message is transparently sent to the optical network unit 03 through the optical line terminal 07. The authentication server 06 may periodically update the first password information.

The embodiment of the present invention provides an authentication system. A network information management system generates first password information, where the first password information is password information required for authentication of an optical network unit, and then, delivers a first notification message carrying the first password information to an optical line terminal, so that the delivered first notification message is transparently sent to the optical network unit through the optical line terminal. The network information management system periodically updates the first password information, which can avoid the problem of password disclosure caused by that password information is manually input or password information is not changed within a long time period and improve password information security.

In the several embodiments provided in the present application, it should be understood that the disclosed system, device, and method may be implemented in other manners. For example, the described device embodiments are merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

In addition, functional units in the devices and systems of embodiments of the present invention may be integrated into one processing unit, or each of the units may exist alone physically, or two or more units are integrated into one unit. Each preceding unit may be implemented through hardware, or may also be implemented in a form of hardware plus a software functional unit.

All or a part of the steps in the foregoing method embodiments may be implemented by a program instructing relevant hardware. The program may be stored in a computer readable storage medium. When the program is run, the steps in the foregoing method embodiments are performed. The storage medium may be any medium that may store program codes, such as a USB flash drive, a removable hard disk, a read-only memory (Read-Only Memory, ROM for short), a random access memory (Random Access Memory, RAM for short), a magnetic disk, or an optical disk.

The foregoing descriptions are merely specific implementation manners of the present invention, but are not intended to limit the protection scope of the present invention. Any variation or replacement readily figured out by persons skilled in the art within the technical scope disclosed in the present invention shall fall within the protection scope of the present invention. Therefore, the protection scope of the present invention shall be subject to the protection scope of the claims.

## Claims

1. An authentication method, applied to a passive optical network system, and comprising:
receiving, by an optical network unit, a first notification message transparently sent from an optical line terminal, wherein the first notification message comprises at least first password information required for authentication of the optical network unit, and the first notification message is a first notification message delivered by a network information management system; and
implementing, by the optical network unit, authentication with the optical line terminal according to the first password information in the first notification message.

2. The method according to claim 1, wherein, the first password information is password information encrypted through a first key, wherein the first key is a key mutually agreed by the optical network unit and the network information management system.

3. The method according to claim 2, wherein, the implementing, by the optical network unit, authentication with the optical line terminal according to the first password information in the first notification message specifically comprises:
parsing, by the optical network unit, according to the first password information in the first notification message, the first password information by using the mutually agreed first key to obtain decrypted first password information; and
implementing, by the optical network unit, authentication with the optical line terminal according to the decrypted first password information.

4. The method according to claim 1, further comprising:
receiving, by the optical network unit, a second notification message transparently sent from the optical line terminal, wherein the second notification message comprises at least second password information required for authentication of the optical network unit, and the second notification message is a second notification message delivered by the network information management system;
decrypting, by the optical network unit, the received second password information by using the first password information as a second key to obtain decrypted second password information; and
implementing, by the optical network unit, next authentication with the optical line terminal according to the decrypted second password information.

5. An authentication method, applied to a passive optical network system, and comprising:
generating, by a network information management system, first password information, wherein the first password information is password information required for authentication of an optical network unit; and
delivering, by the network information management system, a first notification message carrying the first password information to an optical line terminal, so that the first notification message delivered by the network information management system is transparently sent to the optical network unit through the optical line terminal.

6. The authentication method according to claim 5, wherein, the generating, by a network information management system, first password information specifically comprises:
encrypting, by the network information management system, the first password information by using a first key, wherein the first key is a key mutually agreed by the network information management system and the optical network unit; and the delivering, by the network information management system, a first notification message carrying the first password information to an optical line terminal specifically comprises:
delivering, by the network information management system, the first notification message carrying the encrypted first password information to the optical line terminal.

7. The authentication method according to claim 5, further comprising:
periodically updating, by the network information management system, the first password information.

8. The authentication method according to claim 7, further comprising:
generating, by the network information management system, second password information by using the first password information as a second key; and
delivering, by the network information management system, a second notification message carrying the second password information to the optical line terminal, so that the second notification message delivered by the network information management system is transparently sent to the optical network unit through the optical line terminal.

9. An optical network unit, comprising:
a receiving unit, configured to receive a first notification message transparently sent from an optical line terminal, wherein the first notification message comprises at least first password information required for authentication of the optical network unit, and the first notification message is a first notification message delivered by a network information management system; and
an authenticating unit, configured to implement authentication with the optical line terminal according to the first password information in the first notification message.

10. The optical network unit according to claim 9, wherein, the first password information is password information encrypted through a first key, wherein the first key is a key mutually agreed by the optical network unit and the network information management system.

11. The optical network unit according to claim 10, wherein, the authenticating unit is specifically configured to parse, according to the first password information in the first notification message, the first password information by using the mutually agreed first key to obtain decrypted first password information; and implement authentication with the optical line terminal according to the decrypted first password information.

12. The optical network unit according to claim 9, wherein, the receiving unit is further configured to receive a second notification message transparently sent from the optical line terminal, wherein the second notification message comprises at least second password information required for authentication, and the second notification message is a second notification message delivered by the network information management system; and
the authenticating unit is further configured to decrypt the received second password information by using the first password information as a second key to obtain decrypted second password information; and implement next authentication with the optical line terminal according to the decrypted second password information.

13. A network information management system, comprising:
a generating unit, configured to generate first password information, wherein the first password information is password information required for authentication of an optical network unit; and
a sending unit, configured to deliver a first notification message carrying the first password information to an optical line terminal, so that the delivered first notification message is transparently sent to the optical network unit through the optical line terminal.

14. The network information management system according to claim 13, wherein, the generating unit is specifically configured to encrypt the first password information by using a first key, wherein the first key is a key mutually agreed by the network information management system and the optical network unit; and
the sending unit is specifically configured to deliver the first notification message carrying the encrypted first password information to the optical line terminal.

15. The network information management system according to claim 13, further comprising:
an updating unit, configured to periodically update the first password information; wherein
the generating unit is further configured to generate second password information by using the first password information as a second key; and
the sending unit is further configured to deliver a second notification message carrying the second password information to the optical line terminal, so that the second notification message delivered by the network information management system is transparently sent to the optical network unit through the optical line terminal.

16. An authentication system, comprising the optical network unit according to any one of claims 9 to 12 and the network information management system according to any one of claims 13 to 15.
